# EUROPÄISCHE PATENTSCHRIFT

(11) **EP 1 184 275 B1**
(45) Veröffentlichungstag und Bekanntmachung des Hinweises auf die Patenterteilung: **24.08.2005**
(21) Anmeldenummer: 01113755.1
(22) Anmeldetag: 05.06.2001
(51) Int. Cl.: B62K 25/00, B62M 25/00, B62K 27/12, B62K 25/02

(54) **Kupplungsanordnung für eine Fahrrad-Nabenkupplung**
Coupling arrangement for a bicycle hub
Dispositif pour coupler un moyeu de bicyclette

(30) Priorität: 30.08.2000 DE 20014995 U
(43) Veröffentlichungstag der Anmeldung: 06.03.2002
(73) Patentinhaber: Brüggli Produktion & Dienstleistung, 8590 Romanshorn 1 (CH)
(72) Erfinder: Blaser, Reto, Brüggli Produktion & Dienstleistung, 8590 Romanshorn 1 (CH); Hungerbühler, Adrian Brüggli Prod.& Dienstleistung, 8590 Romanshorn 1 (CH); Fischer, Kurt, Brüggli Produktion & Dienstleistung, 8590 Romanshorn 1 (CH); Buschor, Urs, Brüggli Produktion & Dienstleistung, 8590 Romanshorn 1 (CH)
(74) Vertreter: Hertz, Oliver

(56) Entgegenhaltungen:
- DE-U- 29 518 787
- US-A- 3 567 249
- US-A- 3 993 320
- US-A- 6 099 008

## Beschreibung

Die Erfindung betrifft eine Kupplungsanordnung für eine Fahrrad-Nabenkupplung gemäß dem Oberbegriff des Anspruchs 1. Die US-A-3,993,320 zeigt eine derartige Kupplungsanordnung.

Aus dem Stand der Technik sind die verschiedensten Bauformen von Anhängerkupplungen für Fahrradanhänger allgemein bekannt. Der Fahrradanhänger besitzt ein Deichselstück, das an der Anhängerkupplung lösbar verankert ist, wobei die Anhängerkupplung bspw. am Sattelstützrohr oder im Bereich der hinteren Radnabe angebracht ist. Es werden zunehmend Anhängerkupplungen im Bereich der Radnabe (Nabenkupplungen) verwendet, da diese Bauweise fahrdynamische Vorteile bringt und zudem so der Gepäckträger des Fahrrades zur Benutzung frei bleibt.

Es sind verschiedene Bauformen von Nabenkupplungen bekannt, die im Allgemeinen eine Kupplungsplatte aufweisen, mit der ein Zugteil für das Deichselstück an der hinteren Radachse oder einem Rahmenteil, insbesondere dem hinteren Ausfallende des Fahrrads, angebracht ist. Bei einer aus der Praxis bekannten Nabenkupplung ist die Kupplungsplatte auf der Radachse angebracht und mit einem U-förmigen Profil versehen. Das Profil der Kupplungsplatte hintergreift das Ausfallende des Fahrradrahmens wie ein Haken, so dass selbst im Falle eines Radmutterverlustes der Fahrradanhänger sicher am Fahrrad verankert bleibt. Das Hintergreifen des Ausfallendes durch die U-förmige Kupplungsplatte ist jedoch nachteilig, da bei vielen Fahrrädern auf der Innenseite des Ausfallendes nur begrenzt Montageraum zur Verfügung steht. Insbesondere bei Fahrrädern mit Scheiben- oder Trommelbremsen an der hinteren Radnabe ist kein Platz zur Anbringung der U-förmigen Kupplungsplatte.

Aus dem Gebrauchsmuster DE 297 15 098 U1 ist eine Anhängerkupplung mit einer ebenen Kupplungsplatte bekannt, die in Figur 5 illustriert ist. Die herkömmliche Kupplungsanordnung besitzt eine im Wesentlichen dreieckförmige Kupplungsplatte 10' mit einem Haltebereich 20' und einem Trägerbereich 30'. Am Haltebereich 20' sind zwei Bohrungen 21' für Befestigungsschrauben zur Anbringung am Ausfallende bzw. Fahrradrahmen vorgesehen. Am Trägerbereich 30' ist das Zugteil 60' angebracht.

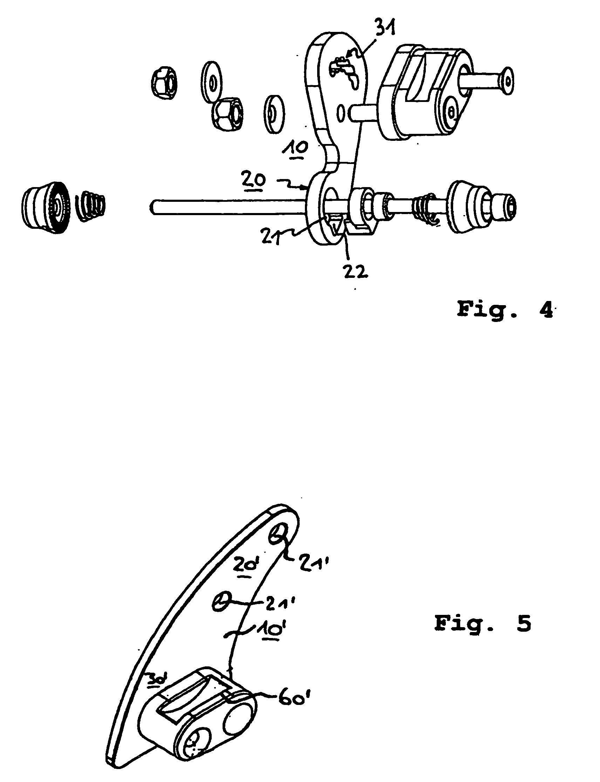

Die in Figur 5 gezeigte Kupplungsplatte 10' ist von der Bauart her für eine Montage im Nabenbereich des Rahmendreiecks des Fahrradhinterbaus ausgelegt. Die Anordnung der Bohrungen 21' ist an die gebräuchlichsten Fahrradrahmen (Diamantrahmen) angepasst, wodurch sich eine grosse Anwendungsbreite abdecken lässt.

Durch die zunehmende Vielfalt der Fahrradrahmengeometrien als auch der immer grösseren Verbreitung von Scheiben- oder Trommelbremsen ergeben sich aber auch Nachteile in Bezug auf die Einsetzbarkeit bei verschiedenen Fahrradtypen und die fahrradseitige Kupplungsmontage. Die Montage der Kupplungsplatte erfordert einen Werkzeugeinsatz und technische Erfahrungen beim Monteur.

Die Aufgabe der Erfindung ist es, eine verbesserte Kupplungsanordnung mit einer im Wesentlichen ebenen Kupplungsplatte bereitzustellen, die einfach, bei Verwendung einer Hohlachse mit Schnellspannachse sogar ohne Werkzeuge und Spezialkenntnisse zu befestigen ist, somit eine hohe Montagesicherheit gewährleistet und einen möglichst breiten Anwendungsbereich bei verschiedenen Fahrradtypen besitzt.

Diese Aufgabe wird durch eine Kupplungsanordnung mit den Merkmalen gemäß Anspruch 1 gelöst. Vorteilhafte Ausführungsformen der Erfindung ergeben sich aus den abhängigen Ansprüchen.

Die Grundidee der Erfindung ist es, bei einer Kupplungsanordnung mit einer ebenen Kupplungsplatte, die von außen am Ausfallende eines Fahrradrahmens ansetzbar ist, die Kupplungsplatte mit einem Haltebereich zu versehen, der eine Achsbohrung zum Aufsetzen auf eine Radachse bzw. eine Schnellspannachse und mit einem aus der Ebene der Kupplungsplatte herausragenden Sicherungsvorsprung ausgestattet ist. Der Sicherungsvorsprung ist dazu ausgelegt, im zusammengesetzten Zustand der Kupplungsanordnung in das Ausfallende, insbesondere in die zur Aufnahme der Radachse vorgesehene Gabel des Ausfallendes, einzugreifen. Dieser Aufbau besitzt den Vorteil, dass die Kupplungsplatte verdrehsicher von außen auf die Radachse aufsetzbar ist. Dies ist bei allen Fahrradtypen, insbesondere bei der Verwendung von Schnellspannachsen, auch ohne technische Vorkenntnis ohne Weiteres möglich.

Gemäß einer bevorzugten Ausführungsform der Erfindung ist die Kupplungsanordnung mehrkomponentig aus der Kupplungsplatte und einer Verdrehsicherung aufgebaut. Die Kupplungsplatte enthält mindestens eine Sicherungsausnehmung. Der Sicherungsvorsprung ist an der Verdrehsicherung vorgesehen. Die Verdrehsicherung ist ein von der Kupplungsplatte trennbares Bauteil, das im zusammengesetzten Zustand der Kupplungsanordnung mit der Kupplungsplatte auf der Radachse angeordnet ist, so dass der Sicherungsvorsprung von der Verdrehsicherung durch die Sicherungsausnehmung in das Ausfallende des Fahrrads ragt. Bei dieser Gestaltung ist die Kupplungsplatte vorteilhafterweise an sich eben und damit unabhängig von der Ausrichtung eng am Ausfallendes des Fahrrads montierbar.

Weitere wichtige Merkmale der erfindungsgemäßen Kupplungsanordnung bestehen in der Bereitstellung einer oder mehrerer Sicherungsausnehmungen im Haltebereich der Kupplungsplatte, die ggf. relativ zur Radachse radial asymmetrisch verteilt angeordnet sind. Mit mehreren Sicherungsausnehmungen lassen sich je nach Orientierung der Kupplungsplatte relativ zum Ausfallende verschiedene Anstellwinkel der Kupplungsplatte einstellen, so dass die Kupplungsanordnung für eine Mehrzahl von Fahrrad- und Deichseltypen geeignet ist.

Die erfindungsgemäße Kupplungsplatte enthält auch einen Trägerbereich zur Anbringung eines Zugteils für ein Deichselstück. Das Zugteil ist vorzugsweise entsprechend dem im deutschen Gebrauchsmuster DE 297 15 098 beschriebenen Zugteil aufgebaut.

Weitere Vorteile und Einzelheiten der Erfindung werden aus der Beschreibung der beigefügten Figuren ersichtlich. Es zeigen:
- Figur 1: eine schematische Perspektivansicht der Anbringung einer erfindungsgemäßen Kupplungsanordnung in auseinandergezogener Darstellung,
- Figur 2: eine schematische Perspektivansicht der Kupplungsanordnung gemäß Figur 1 im zusammengesetzten Zustand,
- Figur 3: eine schematische Draufsicht auf eine Kupplungsplatte einer erfindungsgemäßen Kupplungsanordnung,
- Figur 4: eine schematische Perspektivansicht einer abgewandelten Ausführungsform der erfindungsgemäßen Kupplungsanordnung, und
- Figur 5: eine herkömmliche Kupplungsanordnung (Stand der Technik).

Die Erfindung wird im Folgenden anhand einer bevorzugten Ausführungsform beschrieben, bei der die Kupplungsanordnung aus mehreren Komponenten, insbesondere aus der Kupplungsplatte, der Verdrehsicherung und der Reduzierhülse, aufgebaut ist. Es wird jedoch betont, dass die Erfindung auch mit einer einstückigen Kupplungsanordnung einsetzbar ist, die sich insbesondere durch die Befestigung der Kupplungsplatte auf der Radachse und die Festlegung des Einstellwinkels der Kupplungsplatte durch einen hervorragenden Sicherheitsvorsprung auszeichnet.

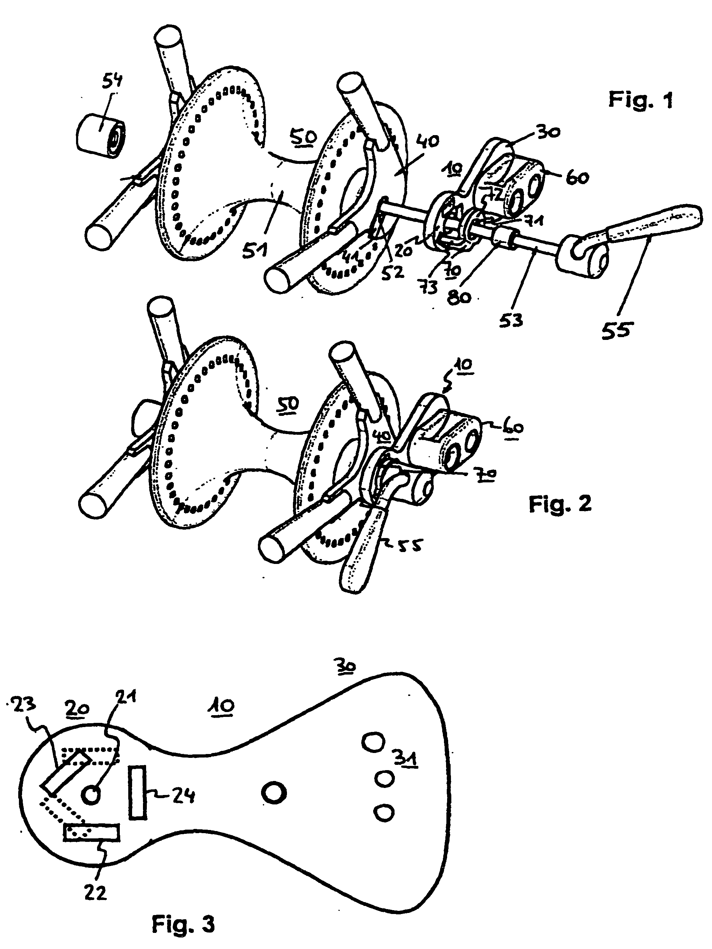

Die Figuren 1 und 2 illustrieren die Anbringung der erfindungsgemäßen Kupplungsanordnung mit der Kupplungsplatte 10, der Verdrehsicherung 70 und der Reduzierhülse 80 im Nabenbereich 50 des Hinterrades eines Fahrrads. Vom Nabenbereich 50 sind die Radnabe 51, die Radachse 52, die hier als Hohlachse ausgebildet ist, die Schnellspannachse 53, die einstellbare Gegenmutter 54 zur Schnellspannachse 53 und der Excenter-Schnellspanner 55 dargestellt.

Die Kupplungspatte 10 ist ein ebenes Bauelement mit einem Haltebereich 20 zur Anbringung an der Radachse 52 bzw. der Schnellspannachse 53 und einem Trägerbereich 30 zur Befestigung des Zugteils 60 für ein (nicht dargestelltes) Deichselstück (siehe auch Figur 3). Zwischen den Halte- und Trägerbereichen 20, 30 besitzt die Kupplungsplatte 10 eine Verjüngung. Falls im Trägerbereich 30 keine Winkelverstellung 31 (siehe unten) für das Zugteil 60 vorgesehen ist, so kann die Kupplungsplatte 10 auch die Form eines geraden Streifens besitzen. Die Kupplungsplatte 10 besteht aus einem ausreichend stabilen Material, wie z. B. Aluminium, Edelstahl oder zugfestem Kunststoff und besitzt eine Dicke von ca. 5 mm.

Im Haltebereich 20 besitzt die Kupplungsplatte 10 eine Achsbohrung 21, deren Innendurchmesser dem Aussendurchmesser (mit Betriebspiel) der Radachse 52 entspricht. Bei Verwendung einer Hohlachse 52 wird die Durchmesserdifferenz zwischen Achsbohrung 21 und Schnellspannachse 53 durch die Reduzierhülse 80 überbrückt, womit auch bei dieser Anwendung eine formschlüssige Verbindung und Kraftübertragung gewährleistet ist. Zudem besitzt die Kupplungsplatte 10 mindestens eine Sicherungsausnehmung 22 zur Aufnahme des Sicherungsvorsprungs 73 der Verdrehsicherung 70 (siehe unten).

Die mindestens eine Sicherungsausnehmung besitzt eine rechteckige Querschnittsfläche, deren Maße vorzugsweise an die Form der gabelförmigen Aufnahme 41 am Ausfallende 40 des Fahrrads angepasst sind. Die Breite der Sicherungsausnehmung 22 ist geringfügig kleiner als der nach Einsetzen der Radachse freibleibende Abschnitt des Ausfallendes, die Höhe der Sicherungsausnehmung 22 ist geringfügig kleiner als die Breite der gabelförmigen Aufnahme 41, wobei eine Anpassung an die am Markt verfügbaren Fahrradtypen vorgesehen ist.

Am Trägerbereich 20 der Kupplungsplatte 10 ist das Zugteil 60 angebracht. Das Zugteil 60 ist bei der dargestellten aus DE 297 15 098 U1 bekannten Ausführungsform mit zwei Schrauben an der Winkeleinstellung 31 (siehe Figur 3) des Trägerbereichs 30 festgeschraubt. Anstelle des gezeigten Zugteils 60 können auch andere an sich bekannte Zugteile zur Einhängung eines Deichselstücks des jeweiligen Fahrradanhängers am Trägerbereich 30 vorgesehen sein.

Die Verdrehsicherung 70 umfasst eine Scheibe 71 mit einer Mittelbohrung 72 und einem aus der Scheibenebene senkrecht abstehenden Sicherungsvorsprung 73. Die Mittelbohrung besitzt vorzugsweise den gleichen Durchmesser wie die Achsbohrung 21 im Haltebereich 20. Der Sicherungsvorsprung 73 ist einstückig mit der Scheibe 71 gebildet. Er besitzt eine Querschnittsgestalt, die der inneren Form der Sicherungsausnehmung 22 entspricht und eine Höhe, welche in der Summe der Dicke der Kupplungsplatte und der gesamten Tiefe minus 0.5 -1mm der Aufnahme 41 am Ausfallende 40 ist.

Die Durchmesser der Achsbohrung 21 und der Mittelbohrung 72 sind vorzugsweise gleich groß und entsprechen dem genormten Aussendurchmesser der Radachse 52. Eine formschlüssige Kraftübertragung erfolgt bei Verwendung einer vollen Radachse 52 (ohne Abbildung) dadurch, dass der Aussendurchmesser der Radachse 52 auch der Breite der gabelförmigen Aussparung 41(mit Betriebspiel) des Ausfallende 40 entspricht.

Bei Verwendung einer Hohlachse 52 (mit Abbildung) erfolgt eine Anpassung zur Kraftübertragung zwischen dem Aussendurchmesser der Schnellspannachse 53, sowie der Breite der Aussparung 41 des Ausfallende 40, als auch dem Durchmesser der Achsbohrung 21 und der Mittelbohrung 72 durch die Reduzierhülse 80.

Dieses zylinderförmiges Bauteil mit einem Außendurchmesser entsprechend dem Innendurchmesser der Achsbohrung 21 bzw. der Mittelbohrung 72, einem Innendurchmesser entsprechend dem Außendurchmesser der Schnellspannachse 53 hat eine maximale Baulänge welche kleiner ist als die Summe aus den Dicken der Kupplungsplatte 10, der Scheibe 71 der Verdrehsicherung 70 und der Dicke des Ausfallende 40 bei der Aussparung 41, womit eine axiale Krafteinwirkung auf die Reduzierhülse 80 beim Spannen des Excenterhebels 55 der Schnellspannachse 53 vermieden wird.

Zum axialen Längenausgleich kann zwischen Reduzierhülse 80 und Schulter des Excenterhebels 55 der Schnellspannachse 53 ein Federring eingesetzt werden.

Zur Montage wird der Schnellspanner 55 geöffnet, die Gegenmutter 54 gelöst und die Schnellspannachse 53 aus der Hohlachse 52 gezogen. Anschließend werden die Verdrehsicherung 70 und die Kupplungsplatte 10 auf die Schnellspannachse 53 aufgesetzt und die Reduzierhülse 80 eingeschoben. Die Verdrehsicherung 70 und die Kupplungsplatte 10 werden je nach dem gewünschten Stellwinkel des Trägerbereichs relativ zur Horizontalen so zusammengesteckt, dass der Sicherungsvorsprung 73 in die gabelförmige Aufnahme 41 des Ausfallendes 40 ragen kann. Anschließend wird die Schnellspannachse 53 wieder eingeführt, die Gegenmutter aufgeschraubt und die Achse mit dem Schnellspanner 55 gesichert. Vorteilhafterweise wird dabei die Kupplungsanordnung 10 in die gewünschte Betriebsposition geschoben.

Figur 3 illustriert einen wichtigen Vorteil der erfindungsgemäßen Kupplungsanordnung hinsichtlich der Anpassung an die verschiedensten Fahrrad- und Deichseltypen. Erfindungsgemäß sind im Haltebereich 20 der Kupplungsplatte 10 vorzugsweise mehrere (bspw. drei) Sicherungsausnehmungen 22, 23, 24 vorgesehen, die die Einstellung verschiedener Ausrichtungen der Kupplungsplatte relativ zum Ausfallende 40 ermöglichen. Die Zahl der Anbringungsmöglichkeiten wird gegenüber der Zahl der Sicherungsausnehmungen sogar noch erhöht, falls die Sicherungsausnehmungen (wie dargestellt) relativ zur Achsbohrung radial asymmetrisch angeordnet sind. Wird nämlich die Kupplungsplatte 10 relativ zur Plattenebene gedreht, so verschieben sich die Positionen der Sicherungsausnehmungen 22 und 23 entsprechend den gepunktet eingezeichneten Positionen, so dass sich weitere Anstellwinkel ergeben. In Kombination mit der Winkeleinstellung 31 im Trägerbereich 30, mit der die Ausrichtung des Zugteils 6 gewählt werden kann, ergeben sich zahlreiche Varianten für eine optimale Anbringung des Deichselstücks des Anhängers. Abweichend von der dargestellten Ausführungsform des Haltebereiches 20 können erfindungsgemäß auch nur eine einzelne Sicherungsausnehmung 22 oder zwei oder mehr als drei Sicherungsausnehmungen vorgesehen sein.

Die Gestaltung mit einer einzelnen Sicherungsausnehmung 22 ist beispielhaft in Fig. 4 illustriert. In Fig. 4 sind Einzelheiten einer abgewandelten Ausführungsform einer erfindungsgemäßen Kupplungsanordnung in auseinandergezogener Darstellung illustriert. Die Kupplungsanordnung ist im wesentlichen analog zu der oben beschriebenen Ausführungsform aufgebaut, so dass ihre Funktion und Zusammensetzung hier im einzelnen nicht beschrieben wird. Im Unterschied zur oben gezeigten Ausführungsform ist nur eine einzelne Sicherungsausnehmung 22 vorgesehen, die in Verbindung mit der Achsbohrung 21 einen Durchbruch im Haltebereich 20 der Kupplungsplatte 10 bildet. Eine weitere Abwandlung im Vergleich zur oben erläuterten Ausführungsform der Erfindung betrifft die Gestaltung der Winkeleinstellung 31, die gemäß Fig. 4 durch eine gekrümmte Aufreihung von aneinander grenzenden und ineinander übergehenden Bohrungen gebildet wird.

Die erfindungsgemäße Kupplungsanordnung kann mit einer (nicht dargestellten) Fangsicherung ausgestattet sein, mit der eine Sicherung des Anhängers am Ausfallende für den Fall einer unbeabsichtigten Öffnung der Schnellspannachse gebildet wird. Die Fangsicherung kann bspw. eine Bohrung in der Kupplungsplatte und ein Drahtseil oder einen Bügel umfassen, die ein Rahmenteil des Fahrrads lose hintergreifen, ohne den Lauf der Nabe oder anderer Bauteile zu behindern.

## Patentansprüche

1. Kupplungsanordnung für eine Fahrrad-Nabenkupplung, insbesondere für Fahrradanhänger, mit einer ebenen Kupplungsplatte (10), die einen Haltebereich (20) zur Anbringung an einem Ausfallende (40) des Fahrrads und einen Trägerbereich (30) zur Anbringung eines Zugteils (60) aufweist, wobei der Haltebereich (20) eine Achsbohrung (21) zum Aufsetzen auf eine Radachse (52, 53) aufweist,
**dadurch gekennzeichnet, dass**
ein aus der Plattenebene hervorragender Sicherungsvorsprung (73) vorgesehen ist, der zum Eingriff in das Ausfallende (40) eingerichtet ist.

2. Kupplungsanordnung gemäß Anspruch 1, bei der der Haltebereich (20) mindestens eine Sicherungsausnehmung (22) aufweist und der Sicherungsvorsprung (73) an einer als getrenntes Bauteil gebildeten Verdrehsicherung (70) vorgesehen ist und im zusammengesetzten Zustand der Kupplungsanordnung durch die Sicherungsausnehmung (22) hindurchragt.

3. Kupplungsanordnung gemäß Anspruch 2, bei der die Verdrehsicherung (70) die Form einer ebenen Scheibe (71) mit einer Mittelbohrung (72) zum Aufsetzen auf die Radachse (52, 53) besitzt und der Sicherungsvorsprung (73) am Rand der Scheibe (71) aus der Scheibenebene hervorragend angeordnet ist.

4. Kupplungsanordnung gemäß Anspruch 2 oder 3, bei der die Achsbohrung (21) des Haltebereiches (20) und die Mittelbohrung (71) der Verdrehsicherung (70) den gleichen Innendurchmesser besitzen, der dem Aussendurchmesser der Radachse (52), sowie der Breite der Aussparung (41) des Ausfallende (40) entspricht.

5. Kupplungsanordnung gemäß Anspruch 2 oder 3, bei der eine Reduzierhülse (80) vorgesehen ist, welche die Durchmesserdifferenz zwischen dem Aussendurchmesser der Schnellspannachse (53) einerseits, der Achsbohrung (21) des Haltebereiches (20) und der Mittelbohrung (71) der Verdrehsicherung (70), der Breite der Aussparung (41) des Ausfallende (40) anderseits, ausgleicht, sowie im zusammengesetzten Zustand der Kupplungsanordnung in das Ausfallende (40) ragt.

6. Kupplungsanordnung gemäß einem der Ansprüche 2 bis 5, bei der der Haltebereich (20) eine Sicherungsausnehmung (22) aufweist, die gemeinsam mit der Achsbohrung (21) einen Durchbruch im Haltebereich (20) der Kupplungsplatte (10) bildet.

7. Kupplungsanordnung gemäß einem der Ansprüche 2 bis 5, bei der der Haltebereich (20) mehrere Sicherungsausnehmungen (22, 23, 24) aufweist, von denen je nach der aktuellen Anbringung der Kupplungsanordnung eine den Durchgriff für die Verdrehsicherung (70) bildet.

8. Kupplungsanordnung gemäß Anspruch 7, bei der die Sicherungsausnehmungen (22, 23, 24) relativ zur Radachse radial asymmetrisch verteilt angeordnet sind.

9. Kupplungsanordnung gemäß einem der vorhergehenden Ansprüche, bei der am Trägerbereich (30) mehrere Bohrungen als Winkelstellung (31) zur wahlweisen Anbringung des Zugteils mit verschiedenen Ausrichtungen relativ zum Haltebereich vorgesehen sind.

## Claims

1. Coupling arrangement for a bicycle hub coupling, in particular for bicycle trailers, with a plane coupling plate (10), which has a holding area (20) for attachment to a fork end (40) of the bicycle and a support area (30) for attachment of a draw part (60), wherein the holding area (20) has an axle hole (21) for attachment to a wheel axle (52, 53), **characterised in that** a locking projection (73) projecting from the plate plane is provided, which is arranged for engagement into the fork end (40).

2. Coupling arrangement according to Claim 1, in which the holding area (20) has at least one locking recess (22), and the locking projection (73) is provided on an antitwist lock (70) formed as a separate component and projects through the locking recess (22) when the coupling arrangement is in assembled state.

3. Coupling arrangement according to Claim 2, in which the antitwist lock (70) is in the form of a plane disc (71) with a central hole (72) for attachment onto the wheel axle (52. 53), and the locking projection (73) is arranged on the edge of the disc (71) to project from the disc plane.

4. Coupling arrangement according to Claim 2 or 3, in which the axle hole (21) of the holding area (20) and the central hole (71) of the antitwist lock (70) have the same inside diameter, which corresponds to the outside diameter of the wheel axis (52) as well as the width of the recess (41) of the fork end (40).

5. Coupling arrangement according to Claim 2 or 3, in which a reducing bush (80) is provided, which compensates the difference in diameter between the outside diameter of the quick action axle (53), on the one hand, the axle hole (21) of the holding area (20) and the central hole (71) of the antitwist lock (70), the width of the recess (41) of the fork end (40), on the other hand, and also projects into the fork end (40) when the coupling assembly is in assembled state.

6. Coupling arrangement according to one of Claims 2 to 5, in which the holding area (20) has a locking recess (22), which together with the axle hole (21) forms a passage in the holding area (20) of the coupling plate (10).

7. Coupling arrangement according to one of Claims 2 to 5, in which the holding area (20) has several locking recesses (22, 23, 24), each of which forms the penetration point for the antitwist lock (70), depending on the current attachment of the coupling arrangement.

8. Coupling arrangement according to Claim 7, in which the locking recesses (22, 23, 24) are arranged radially asymmctrically in relation to the wheel axle.

9. Coupling arrangement according to one of the preceding claims, in which several holes are provided on the support area (30) as angle position (31) for the selective attachment of the draw part with different orientations in relation to the holding area.

## Revendications

1. Dispositif servant à coupler un moyeu de bicyclette, en particulier pour des remorques pour bicyclette avec une plaque d'accouplement l'installation sur un cadre (40), de la bicyclette et une zone porteuse (30) pour l'installation d'une pièce de traction (60), sachant que la zone d'arrêt (20) comporte un alésage d'axe (21) pour la pose sur un axe de bicyclette (52, 53), **caractérisé en ce qu'**une pièce de sécurité en saillie (73) est prévue, installée pour s'engrener dans le cadre.

2. Dispositif de couplage selon la revendication 1, dans lequel la zone d'arrêt (20) comporte au moins un logement de sécurité (22) et la pièce de sécurité en saillie (73) est prévue sur un crochet de sécurité (70) formé comme un composant séparé et passe à travers le logement de sécurité (22) lorsque le dispositif de couplage est monté.

3. Dispositif de couplage selon la revendication 1, dans lequel le crochet de sécurité (70) a la forme d'un disque plat (71) avec un alésage central (72) pour la pose sur l'axe de la bicyclette (52, 53) et la pièce de sécurité en saillie (73) est disposée sur le bord du disque (71) en sortant de la surface du disque.

4. Dispositif de couplage selon la revendication 2 ou 3, dans lequel l'alésage de l'axe (21) de là zone d'arrêt (20) et l'alésage central (71) du crochet de sécurité (70) ont le même diamètre intérieur, correspondant au diamètre extérieur de l'axe de bicyclette (52) ainsi qu'à la largeur de l'usinage (41) du cadre (40).

5. Dispositif de couplage selon la revendication 2 ou 3, dans lequel une douille de réduction (80) est prévue, laquelle compense la différence de diamètre entre le diamètre extérieur de l'axe d'attache rapide (53) d'une part, l'alésage de l'axe (21) de la zone d'arrêt (20) et l'alésage central (71) du crochet de sécurité (70), la largeur de l'usinage (41) du cadre (40) d'autre part, de même qu'il sort en saillie dans le cadre (40) lorsque le dispositif de couplage est monté.

6. Dispositif de couplage selon l'une des revendications 2 à 5, dans lequel la zone d'arrêt.(20) comporte un logement de sécurité (22) qui forme en même temps que l'alésage de l'axe (21) une fissure dans la zone d'arrêt (20) de la plaque de couplage (10).

7. Dispositif de couplage selon l'une des revendications 2 à 5, dans lequel la zone d'arrêt (20) comporte plusieurs logements de sécurité (22, 23, 24) à partir desquels chacun, selon l'application actuelle du dispositif de couplage, forme un facteur de pénétration pour le crochet de sécurité. (70).

8. Dispositif de couplage selon la revendication 7, dans lequel les logements de sécurité (22, 23, 24) sont disposés et répartis de manière radiale asymétrique par rapport à l'axe de la bicyclette.

9. Dispositif de couplage selon l'une des revendications précédentes, dans lequel sur la zone d'arrêt (30) plusieurs alésages sont prévus comme position angulaire (31) pour l'application facultative de la pièce de traction avec différentes directions par rapport à la zone d'arrêt.
